# FASCICULE DE BREVET EUROPEEN

(11) **EP 2 483 326 B1**
(45) Date de publication et mention de la délivrance du brevet: **22.01.2014**
(21) Numéro de dépôt: 10770596.4
(22) Date de dépôt: 21.09.2010
(51) Int. Cl.: C08L 9/00, C08L 7/00, C08L 21/00, C08L 77/06, C08L 101/00, C08K 3/04, C08K 5/14

(54) **COMPOSITION COMPRENANT UN MELANGE D'ELASTOMERE ET DE POLYMERE SUPRAMOLECULAIRE**
ZUSAMMENSETZUNG MIT ELASTOMERMISCHUNG UND SUPRAMOLECULAREN POLYMEREN
COMPOSITION COMPRISING MIXED ELASTOMERS AND SUPRAMOLECULAR POLYMERS

(30) Priorité: 23.09.2009 FR 0956565
(43) Date de publication de la demande: 08.08.2012
(73) Titulaire: Arkema France, 92700 Colombes (FR)
(72) Inventeur: HIDALGO, Manuel, F-69530 Brignais (FR); PLAUT, Christelle, F-69540 Irigny (FR); DEFRANCISCI, Alfredo, F-69003 Lyon (FR)
(86) Numéro de dépôt international: PCT/FR2010/051957
(87) Numéro de publication internationale: WO 2011/036388

(56) Documents cités:
- WO-A1-2009/071554
- WO-A2-2008/029065
- FR-A1- 2 925 505
- PHILIPPE CORDIER, FRANCOIS TOURNILHAC, CORINNE SOULIÉ-ZIAKOVIC, LUDWIK LEIBLER: "Self-healing and thermoreversible rubber from supramolecular assembly", NATURE LETTERS, vol. 451, no. 7181, 21 février 2008 (2008-02-21), pages 977-980, XP002576220, DOI: 10.1038/nature06669

## Description

La présente invention concerne des compositions à base d'élastomères et de polymères supramoléculaires, compositions éventuellement réticulées chimiquement, et leur utilisation dans de nombreux domaines de l'industrie.

Les matériaux dits supramoléculaires sont des matériaux comportant des composés associés par des liaisons non covalentes, telles que des liaisons hydrogène, ioniques et/ou hydrophobes. Un avantage de ces matériaux est que ces liaisons physiques sont réversibles, notamment sous l'influence de la température ou par l'action d'un solvant sélectif.

Certains d'entre eux possèdent en outre des propriétés d'élastomères. Contrairement aux élastomères classiques, ces matériaux ont l'avantage de pouvoir se fluidifier au-dessus d'une certaine température, ce qui facilite leur mise en oeuvre, notamment le bon remplissage des moules, ainsi que leur recyclage.

Certains de ces polymères supra moléculaires sont, par ailleurs, constitués de molécules liées en réseaux exclusivement par des liaisons physiques réversibles. Malgré les forces de liaison physiques relativement modestes des molécules d'un tel réseau supra moléculaire, ces matériaux sont, comme les élastomères classiques ou conventionnels, capables de présenter une stabilité dimensionnelle sur des temps très longs et de recouvrer leur forme initiale après de grandes déformations. Ils peuvent être utilisés pour fabriquer, par exemple, des joints d'étanchéité, des isolants thermiques ou acoustiques, des pneumatiques, des câbles, des gaines, des semelles de chaussures, des emballages, des patchs (cosmétiques ou dermo-pharmaceutiques), des pansements, des colliers de serrage élastiques, des tubes à vide, ou encore des tubes et flexibles de transport de fluides.

Des matériaux supramoléculaires ont déjà été décrits par la Demanderesse. Plus particulièrement, la Demanderesse a déjà décrit des matériaux supramoléculaires ayant le comportement d'élastomères.

Un matériau supramoléculaire élastomère auto-cicatrisant est, par ailleurs, divulgué dans le document WO 2006/087475. Il comprend des molécules renfermant au moins trois groupes fonctionnels associatifs, tels que des groupes imidazolidone, susceptibles de former plusieurs liaisons physiques et qui peuvent être obtenus en faisant réagir de l'urée sur le produit de la réaction d'une polyamine avec des triacides. Les matériaux obtenus suivant les enseignements des documents WO 03/059964 et WO 2006/087475 renferment des triacides reliés de façon covalente, via des fonctions amide, à des jonctions intermédiaires et/ou à des terminaisons, constituées du produit de la réaction de la polyamine avec l'urée et qui contiennent donc de nombreux groupes associatifs, c'est-à-dire renfermant des fonctions N-H et C=O susceptibles de s'associer les unes aux autres par des liaisons hydrogène. Précisément, la publication de P. CORDIER, L. LEIBLER, F. TOURNILHAC et C. SOULIE-ZIAKOVIC dans , Nature, 451, 977 (2008) mentionne qu'un polymère synthétisé selon le mode opératoire décrit dans le document WO 2006/087475 comporte des terminaisons amidoéthyl-imidazolidone et des jonctions di (amidoéthyl) urée et diamidotétraéthyl triurée. On comprend qu'en raison du procédé de synthèse de ces matériaux, les natures chimiques des jonctions et terminaisons précitées sont interdépendantes, en ce sens qu'il n'est pas possible de faire varier la nature de la terminaison amidoéthyl-imidazolidone sans affecter celle des deux jonctions.

Le document intitulé « Versatile One-Pot Synthesis of Supramolecular Plastics, and Self-Healing Rubbers » par Damien MONTARNAL, François TOURNILHAC, Manuel HIDALGO, Jean-Luc COUTURIER, et Ludwik LEIBLER paru dans « Journal of the American Chemical Society », 131 (23) : 7966 ; le 17 juin 2009 décrit un procédé alternatif pour l'obtention de polymères supramoléculaires, y compris ceux ayant des propriétés élastomériques du type de ceux de la publication par P. CORDIER *et al.* Cette méthode permet, entre autre, de briser l'interdépendance des natures chimiques entre les jonctions et les terminaisons du réseau supramoléculaire. Il devient ainsi possible de contrôler la nature chimique des terminaisons de manière indépendante de celle des jonctions.

Ces nouveaux polymères auto-cicatrisants ont d'énormes avantages comme ceux d'être facilement processables, d'être issus majoritairement de matières premières renouvelables, d'être auto-réparables. Cependant, leurs propriétés mécaniques restent insuffisantes pour beaucoup d'applications des caoutchoucs, où, notamment, de bons compromis des propriétés mécaniques sont requis. Ainsi, les polymères supramoléculaires auto-cicatrisants décrits dans l'art antérieur, présentent des tenues à froid médiocres du fait de leur température de transition vitreuse, Tg, relativement élevée (proche de l'ambiant), des propriétés à la rupture faibles (contrainte et élongation à la rupture), des retours élastiques après déformation lents.

Une partie de ces défauts peut être gommée grâce à la formulation, comme c'est largement connu de l'homme de l'art, notamment par l'ajout de charges comme le carbonate de calcium, la silice, le noir de carbone, ou des plastifiants, des huiles et autres. Eventuellement, ces polymères auto-cicatrisants peuvent également être légèrement réticulés chimiquement, par exemple avec des peroxydes. Cependant la formulation (charges, plastifiants, huiles et autres) et la réticulation chimique de ces nouveaux polymères ont leurs limites et se traduisent généralement par une perte notable de propriétés comme, par exemple, la capacité auto-réparante. Ainsi par exemple, bien qu'il soit possible d'augmenter la contrainte à la rupture d'un polymère supramoléculaire auto-cicatrisant, en rajoutant des charges, cela n'a pas d'effet favorable sur la tenue à froid et l'augmentation de contrainte reste modeste du fait d'un faible taux de charge nécessaire pour conserver l'auto-réparation optimale.

La demanderesse a maintenant trouvé une façon d'améliorer les propriétés de ces nouveaux polymères supramoléculaires auto-réparables en mettant au point une composition comprenant ces polymères en combinaison avec des élastomères classiques, parmi lesquels on peut citer les caoutchoucs naturels ou de synthèse connus depuis longtemps, ou les élastomères thermoplastiques. Une telle composition peut comprendre des charges, plastifiants et autres et également être combinée à des systèmes réticulants.

Plus précisément, la présente invention a pour objet une composition comprenant :
(i) au moins un élastomère qui est choisi parmi le caoutchouc naturel et un polymère ou copolymère de synthèse issu de la polymérisation d'une majorité de monomères de masse moléculaire inférieure à 400 g/mol ; et
(ii) au moins un polymère supramoléculaire susceptible d'être obtenu par la réaction d'au moins un composé au moins trifonctionnel (A) porteur de premières et secondes fonctions avec :
   - au moins un composé (B) portant, d'une part, au moins un groupe réactif susceptible de réagir avec les premières fonctions de (A) et, d'autre part, au moins un groupe associatif ; et
   - au moins un composé au moins bifonctionnel (C) dont les fonctions sont susceptibles de réagir avec les secondes fonctions du composé (A) pour former des ponts ester, thioester, amide.

Les inventeurs ont montré que les compositions objet de l'invention, comprenant des élastomères et des polymères supramoléculaires présentent d'excellents compromis de propriétés. En particulier, les inventeurs ont montré que ces mélanges permettent d'améliorer notablement les propriétés des polymères supramoléculaires et de remédier à leurs principaux défauts déjà cités tels que les faibles valeurs de contrainte à la rupture, et/ou leur mauvaise tenue à froid et/ou encore leur vitesse de récupération de la déformation, lorsque sollicités mécaniquement. De plus, les propriétés d'auto-réparation des polymères supramoléculaires auto-cicatrisants, peuvent être conservées dans ces mélanges. Ainsi, des compositions conforme à l'invention présentent à la fois des propriétés d'autoréparation mais également un excellent compromis entre contrainte et élongation à la rupture ou une énergie de rupture significativement améliorée par rapport à celle des polymères supramoléculaires utilisés seuls.

Les inventeurs ont également montré (exemple 1) que les compositions conforme à l'invention comprenant un mélange d'élastomère et de polymère supramoléculaire élastomérique présentent de meilleures propriétés mécaniques de résistance à la rupture que chacun des composants considérés isolément.

Les compositions conformes à l'invention comprenant un mélange polymère supramoléculaire avec un élastomère conventionnel apportent des améliorations, non seulement lorsque ledit mélange est thermodynamiquement compatible, c'est-à-dire, lorsque les deux composants ne forment qu'une seule phase dans le mélange les comprenant, mais également lorsque ledit mélange n'est pas compatible et que le mélange est bi- ou poly-phasé. La demanderesse a ainsi trouvé que les mélanges de polymères supramoléculaires avec des élastomères conventionnels permettaient d'obtenir des compromis intéressants des propriétés sur toute la gamme de compositions des mélanges et ce malgré la présence dans certains mélanges d'au moins 2 phases traduisant une incompatibilité thermodynamique des deux types d'élastomères.

A titre de préambule, on notera que l'expression "compris entre" doit être interprétée, dans la présente description, comme incluant les bornes citées.

### Les élastomères

Les élastomères de la présente invention, sont des polymères caoutchoutiques (ou élastomériques) présentant une ou plusieurs température(s) de transition vitreuse inférieure(s) à leur température d'utilisation, autrement dit, des matériaux relativement souples à la température d'utilisation, ayant au moins une propriété typique de l'élasticité caoutchoutique, telles qu'un retour élastique après des déformations importantes (typiquement supérieures à 100%), une déformation isocorique ou à volume constant se traduisant par un coefficient de Poisson proche de la valeur 0,5 ou une courbe de traction typique d'un élastomère, comme on peut trouver dans la littérature tels que dans le livre Mécanique de matériaux polymères par J.L. HALARY, F. LAUPRETRE et L. MONNERIE. Ed. BELIN, collection Echelles. c. 2008 (par exemple dans les chapitres 1 et 13). L'homme de l'art connaît ces propriétés sous des noms tels que l'hyperélasticité, l'élasticité caoutchoutique ou l'élasticité entropique. De tels matériaux présentent de préférence un module de Young, mesuré à la température d'utilisation, compris entre 1 000 Pa et 100 000 000 Pa, et, de préférence, compris entre 50 000 Pa et 50 000 000 Pa. Ils présentent également des déformations à la rupture supérieures à 20 % et, de préférence supérieures à 100%.

De préférence, les élastomères de la présente invention présentent la propriété de pouvoir être soumis à une déformation uniaxiale à la température d'utilisation, par exemple à température ambiante, d'au moins 20%, par exemple pendant 15 minutes, et de recouvrer, une fois cette contrainte relâchée, l'essentiel de leur dimension initiale, par exemple, avec une déformation rémanente inférieure à 5% de sa dimension initiale.

Ces élastomères sont soit d'origine naturelle comme les matières polymères élastomériques issues de l'exploitation du latex naturel, soit d'origine synthétique comme les polymères et copolymères obtenus par polymérisation en chaîne, catalytique ou par étapes, impliquant une majorité de monomères de masse moléculaire peu élevée, typiquement inférieure à 400 g/mol, voire inférieure à 300 g/mol. Aussi bien les élastomères issus du latex naturel que les polymères élastomériques synthétiques peuvent également être chimiquement modifiés par des réactions de fonctionnalisation sur les chaînes polymères préalablement formés. Ainsi par exemple, les élastomères halogénés peuvent être obtenus par halogénation totale ou partielle des doubles liaisons encore présentes dans les chaînes polymères. De manière analogue, certains élastomères hydrogénés, sont obtenus par des réactions d'hydrogénation partielle ou totale de ces doubles liaisons restantes.

Parmi les élastomères, utiles pour la préparation des matériaux de l'invention, nous pouvons citer comme exemples non exclusifs, le caoutchouc naturel, le polybutadiène, le poly isoprène de synthèse, le poly chloroprène et leurs versions hydrogénées, le polyisobutylène, les copolymères à blocs du polybutadiène et de l'isoprène avec le styrène, ainsi que leurs versions hydrogénées comme le poly styrène-b-butadiène (SB), le poly styrène-b-butadiène-b-styrène (SBS), le poly styrène-b-isoprène-b-styrène (SIS), les poly styrène-b-(isoprène-stat-butadiène)-b-styrène ou poly styrène-b-isoprène-b-butadiène-b-styrène (SIBS), le SBS hydrogéné (SEBS), le poly styrène-b-butadiène-b-méthyl méthacrylate (SBM), ainsi que sa version hydrogénée (SEBM), le poly méthylméthacrylate-b-acrylate de butyle-b-méthyl méthacrylate (MAM), le poly styrène-b-acrylate de butyle-b-styrène (SAS), les copolymères statistiques du butadiène avec le styrène (SBR) et l'acrylonitrile (NBR) et leurs versions hydrogénées, les caoutchoucs butyle ou halogénés, les polyéthylènes, les polypropylènes, les élastomères silicone de formule générale -(Si(R)(CH₃)-O)ₙ- avec CH₃ et R liés à l'atome de silicium et celui-ci lié à l'atome d'oxygène, et R pouvant être un radical méthyl, phényl, vinyl, trifluoropropyl ou 2 cyanoéthyl, les copolymères éthylène-alcool vinylique, les copolymères d'éthylène-propylène et d'éthylène-propylène-diène, les copolymères de l'éthylène avec des monomères acryliques et vinyliques comme les copolymères d'éthylène et acétate de vinyle, les copolymères d'éthylène, acétate de vinyle, et anhydride maléique, disponibles auprès de la société ARKEMA sous la dénomination commerciale OREVAC®, les copolymères d'éthylène, ester acrylique, les copolymères d'éthylène, ester acrylique, anhydride maléique, les copolymères d'éthylène, ester acrylique, ester acrylique fonctionnel comme l'acrylate ou méthacrylate de glycidyle, disponibles auprès de la société ARKEMA sous la dénomination commerciale LOTADER®, des polymères ou copolymères acryliques souples comme les résines à base d'esters méthacryliques telles que le polyacrylate de butyle et ses copolymères avec le styrène, ou d'autres monomères acryliques ou vinyliques, les copolymères multiblocs polyamide/polyéther comme ceux disponibles auprès de la société ARKEMA sous la dénomination PEBAX®, les élastomères à base de polyesters et de polyuréthane

(PUR), les caoutchoucs recyclés à base d'élastomères thermoplastiques ou à base de caoutchouc réticulé recyclé comme celui issu du recyclage de pneumatiques, ainsi que leurs mélanges.

A titre préférentiel, on utilise à titre d'élastomère un ou plusieurs élastomères choisis dans la liste ci-dessous qui conviennent avantageusement à la fabrication d'objets en caoutchouc.

De manière préférée, l'élastomère selon l'invention peut comprendre un ou plusieurs élastomères diéniques réticulés ou non, vierges ou issus d'un ou plusieurs recyclages. Par élastomères diéniques, on entend plus précisément :
(1) les homopolymères obtenus par polymérisation d'un monomère diène conjugué ayant de 4 à 22 atomes de carbone, comme par exemple : le butadiène-1,3, le méthyl-2 butadiène-1,3, le diméthyl-2,3 butadiène-1,3, le diéthyl-2,3 butadiène-1,3, le méthyl-2 éthyl-3 butadiène-1,3, le chloro-2 butadiène-1,3, le méthyl-2 isopropyl-3 butadiène-1,3, le phényl-1 butadiène-1,3, le pentadiène-1,3, l'hexadiène-2,4 ;
(2) les copolymères obtenus par copolymérisation d'au moins deux des diènes conjugués précités entre eux ou par copolymérisation d'un ou plusieurs des diènes conjugués précités avec un ou plusieurs monomères insaturés éthyléniquement choisis parmi :
   les monomères vinyles aromatiques ayant de 8 à 20 atomes de carbone, comme par exemple : le styrène, l'ortho-, méta- ou paraméthylstyrène, le mélange commercial « vinyl-toluène », le paratertiobutylstyrène, les méthoxystyrènes, les chlorostyrènes, le vinylmésitylène, le divinylbenzène, le vinylnaphtalène ;
   les monomères nitriles vinyliques ayant de 3 à 12 atomes de carbone, comme par exemple l'acrylonitrile, le méthacrylonitrile ;
   les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;
   les copolymères peuvent contenir entre 99 % et 20 % en poids d'unités diéniques et entre 1 % et 80 % en poids d'unités vinyles aromatiques, nitriles vinyliques et/ou esters acryliques ;
(3) les copolymères ternaires obtenus par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène (élastomère EPDM) ;
(4) les copolymères obtenus par copolymérisation d'isobutène et d'isoprène (caoutchouc butyle), ainsi que les versions halogénées, en particulier chlorées ou bromées, de ces copolymères ;
(5) un mélange de plusieurs des élastomères précités (1) à (4) entre eux.

Les polymères utilisables selon l'invention peuvent être obtenus selon des techniques classiques de polymérisation bien connues de l'homme du métier.

Dans un mode de réalisation de l'invention, l'élastomère comprend ou est constitué exclusivement de polymères élastomériques recyclés, soit thermoplastiques, soit du caoutchouc réticulé recyclé. A ce titre, il est possible de citer en exemple, les caoutchoucs issus de l'industrie du recyclage des matériaux caoutchoutiques réticulés comme ceux servant à la fabrication de pneumatiques.

De plus, s'agissant d'un caoutchouc recyclé formulé, il contiendra, avant le mélange, des charges qui feront partie du mélange final. Selon un mode préféré, le caoutchouc conventionnel recyclé est issu du recyclage des pneumatiques.

Une réticulation chimique permet d'améliorer les propriétés de la composition objet de l'invention.

Ainsi, la composition objet de l'invention peut être réticulée chimiquement et peut comprendre, outre l'élastomère et le polymère supramoléculaire, au moins un agent réticulant ou un mélange d'agents réticulants

Il existe de nombreuses méthodes de réticulation chimique de matériaux élastomères, parmi lesquelles, les plus utilisées sont celles à base de composés soufrés, utiles pour la réticulation de matériaux élastomères contenant des insaturations dans leurs chaînes principales, comme le polyisoprène naturel ou de synthèse, le polybutadiène, le polychloroprène et leurs copolymères, notamment avec du styrène, de l'acrylonitrile et des monomères acryliques. Le soufre est capable de former des ponts mono, bi ou polysulfure entre deux chaînes, par réaction avec des insaturations présentes initialement dans celles-ci.

Ainsi, l'agent réticulant peut être choisi parmi le soufre de préférence sous forme de poudre et des composés donneurs de soufre, les oxydes métalliques, les bis maléimides, les dérivés de la benzoquinon. A titre d'exemple, d'agents réticulants, on peut citer le soufre, le disulfure de dimorpholine, l'alkyl phénol disulfure, les oxydes de zinc et de magnésium, la benzoquinone dioxyme, la m-phénylènebismaleimide.

Une autre méthode très usitée est celle de la réticulation chimique aux peroxydes qui par l'intermédiaire de réactions radicalaires, provoquent des arrachements de radicaux H ● dans les chaînes polymères, lesquelles se trouvent alors capables de s'unir par la recombinaison des radicaux C ● ainsi crées.

Parmi les peroxydes utilisables pour l'invention, nous pouvons citer ceux de la famille des alkyl peroxydes comme par exemple le 1,3 1,4-Bis(tert-butylperoxyisopropyl)benzène, le peroxyde de dicumyle, le tert-butylcumyl peroxyde, le 2,5-diméthyl-2,5-di-(tert-butylperoxy) hexane, le di-tertio butyl peroxyde, ceux de la famille des perketales comme par exemple le n-butyl-4,4'-di(tert-butylperoxy)valérate, le 1,1'-di(tert-butylperoxy)-3,3,5,-trimethylcyclohexane, le 1,1-di(tertio-butylperoxy)-cyclohexane, le diperoxyde de di-tert-butyle et de 1,1,4,4-tetraméthylbut-2-yne-1,4-ylène, ceux de la famille des diacyl peroxydes comme par exemple le dibenzoyle peroxyde, ceux de la famille des peroxycarbonates comme par exemple le 00-tertio-butyl-0-(2-éthyl-hexyl)-monoperoxy carbonate.

Les méthodes industrielles de réticulation chimique d'élastomères font appel à des formulations plus ou moins complexes, dans lesquelles on peut trouver, par exemple, en plus des agents de réticulation principaux comme le soufre ou les peroxydes, des accélérateurs, des retardateurs, des synergistes, des charges, des stabilisants thermiques et anti-rayonnement, des « short-stoppers » ou agents modérateurs.

La réticulation non accélérée au soufre est peu utilisée du fait du développement progressif d'agents accélérateurs ou activateurs, à action rapide ou retardée. Parmi ces agents on peut citer les amines comme par exemple l'aniline, la diphényl guanidine, la di-orto tolyl guanidine, les thiocarbanilides, les dithiocarbamates comme par exemple le tetramethylthiuram monosulfure, le tetraméthylthiuram disulfure, le diéthyldithiocarbamate de zinc, les benzothiazoles comme le 2-mercaptobenzothiazole, le 2,2'-dithiobisbenzothiazole, les benzothiazolesulfénamides comme le N-ciclohexylbenzothiazole-2-sulfénamide, le N-t-butylbenzothiazole-2-sulfénamide, le 2-morpholinothiobenzothiazole, le N-dicyclohexylbenzothiazole-2-sulfénamide.

Par exemple à titre d'assistants de vulcanisation on peut citer :
Les acides gras comme l'acide propionique, l'acide acrylique, l'acide maléique, l'acide stéarique et leurs sels métalliques comme le stéarate de zinc, le butanoate de zinc, l'acrylate ou le maléate de zinc.

### Procédés objets de l'invention

L'invention a encore pour objet un procédé de fabrication d'une composition, ledit procédé comprenant :
- au moins une étape (a) de mélange d'un élastomère et d'un polymère supramoléculaire tels que définis ci-dessus ; et
- au moins une étape (b) d'ajout d'un agent réticulant ou d'un mélange d'agents réticulants, ladite étape étant réalisée pendant ou après l'étape (a) ; puis
- une étape (c) de réticulation à chaud.

De préférence, l'étape (a) se déroule dans des conditions de cisaillement mécanique et de températures telles que le mélange puisse être rendu homogène à la vue, et, en particulier dans des outils de transformation coutumiers pour l'homme de l'art, comme, par exemple, des mélangeurs dont des mélangeurs internes, des extrudeuses, des calandreuses, des presses statiques, des presses à injection, ou tout autre type d'outil utilisé communément pour mélanger des polymères.

L'étape (c) de réticulation à chaud s'effectue en augmentant la température du mélange obtenu à l'étape (b) jusqu'à la température de réticulation.

Cette température de réticulation est maintenue pendant une période de temps suffisante pour que le mélange soit réticulé.

La température et le temps de réticulation sont choisis en fonction du système de réticulation employé. Par ailleurs, le système de réticulation (agents de réticulation, accélérateurs, rétardateurs, etc.) est choisi de manière à ce que l'essentiel de la réticulation se produise pendant cette étape (c) de réticulation, à la température et pendant le temps de réticulation, et non pas avant. Il est ainsi préférable d'incorporer les composants du système de réticulation au mélange à une température inférieure à la température de réticulation, et de faire monter la température lorsqu'il est souhaité de déclencher la réticulation. L'étape (c) de réticulation s'effectue par exemple dans un moule, avec ou sans pression, ou sur un support. La température de réticulation est également déterminée pour que la réticulation puisse s'effectuer dans un temps convenable et adapté à la technique de moulage ou de dépôt retenue. De manière particulièrement préférée, cette température de réticulation est comprise entre 100 et 200°C.

L'agent réticulant et, en général, tous les additifs retenus comme des plastifiants, des charges minérales ou organiques, des stabilisants, etc. peuvent alternativement être ajoutés avant l'étape (a). Dans ce cas, ledit agent réticulant et/ou lesdits additifs peuvent être ajoutés à l'élastomère ou au polymère supramoléculaire mis en oeuvre dans la composition objet de l'invention, avant leur mélange au cours de l'étape (a). Dans ce cas, il est préféré que la température maximale atteinte pendant l'étape de mélange (a) reste inférieure à la température de réticulation qui sera fixée lors de l'étape de réticulation (b).

L'invention a donc également pour objet une composition comprenant au moins un polymère supramoléculaire et au moins un agent réticulant, ladite composition étant destinée à être ensuite mélangée à un élastomère.

L'invention a encore pour objet l'utilisation d'un agent réticulant pour réticuler une composition comprenant un mélange d'elastomère et de polymère supramoléculaire, ainsi que le mélange lui-même, réticulé.

Ledit agent réticulant peut être utilisé seul ou en mélange avec d'autres agents réticulants, et éventuellement des accélérateurs ou des rétardateurs, des synergistes ou tout autre additif faisant partie habituellement de systèmes de réticulation car jouant un rôle sur la cinétique ou le mécanisme de celle-ci.

### Polymères supramoléculaires

Les réactifs utilisés pour la fabrication des matériaux supramoléculaires mis en oeuvre dans la composition selon l'invention seront maintenant décrits plus en détail.

Comme indiqué ci-dessus, le polymère supramoléculaire est susceptible d'être obtenu par la réaction d'au moins un composé au moins trifonctionnel (A) porteur de premières et secondes fonctions avec :
- au moins un composé (B) portant, d'une part, au moins un groupe réactif susceptible de réagir avec les premières fonctions de (A) et, d'autre part, au moins un groupe associatif ; et
- au moins un composé au moins bifonctionnel (C) dont les fonctions sont susceptibles de réagir avec les secondes fonctions du composé (A) pour former des ponts ester ou thioester, ou amide.

Par "groupes associatifs", on entend des groupes susceptibles de s'associer les uns aux autres par des liaisons hydrogène, avantageusement par 1 à 6 liaisons hydrogène. Des exemples de groupes associatifs utilisables sont les groupes imidazolidinyle, triazolyle, triazinyle, bis-uréyle, uréido-pyrimidyle. On préfère que le nombre moyen des groupes associatifs terminaux par molécule du polymère supramoléculaire soit d'au moins 3. Il est avantageusement d'au plus 6. Ceux-ci sont reliés de façon covalente à la molécule. Par "de façon covalente", on entend que les groupes associatifs sont reliés aux fonctions terminales de la molécule soit via une liaison directe soit, de préférence, via une chaîne, notamment alkylène.

Par "groupes réactifs" ou "fonctions", on entend des fonctions chimiques susceptibles de réagir avec d'autres fonctions chimiques pour former des liaisons covalentes, conduisant notamment à la formation de ponts ester, thioester, amide, urée ou uréthanne et en particulier de ponts ester et amide. Un composé "bifonctionnel" désigne un composé portant deux fonctions réactives identiques ou différentes. Un composé "au moins trifonctionnel" désigne un composé portant au moins trois fonctions réactives identiques ou différentes.

Par "fragment", on entend au sens de l'invention un motif d'une molécule situé entre deux ou trois ponts tels que définis ci-dessus. Un fragment "bifonctionnel" est susceptible d'être obtenu à partir d'un composé bifonctionnel et un fragment "trifonctionnel" est susceptible d'être obtenu à partir d'un composé trifonctionnel. Les molécules du polymère supramoléculaire comprennent des fragments au moins bifonctionnels, avantageusement bifonctionnels, et des fragments au moins trifonctionnels, avantageusement trifonctionnels.

De préférence, le composé (A), représente plus de 50% en masse par rapport à la masse totale du polymère supramoléculaire.

Le composé (A) mis en oeuvre dans la première étape du procédé de synthèse du polymère supramoléculaire peut en particulier porter au moins trois fonctions identiques ou différentes choisies parmi les fonctions acide, ester ou chlorure d'acyle. Il comprend avantageusement de 5 à 100, de préférence de 12 à 100 et plus préférentiellement de 24 à 90 atomes de carbone.

Le composé (A) peut, lorsqu'il est amené à réagir avec le composé (B) et ou le composé (C) se trouver en mélange avec des composés mono- et bifonctionnels, tels que des mono- et diacides, en particulier des mono- et dimères d'acides gras.

On préfère utiliser selon l'invention à titre de composé (A) les mélanges de dimères (oligomères de 2 monomères identiques ou différents) et trimères d'acides gras d'origine végétale. Ces composés résultent de l'oligomérisation d'acides gras insaturés tels que les acides undécylénique, myristoléique, palmitoléique, oléique, linoléique, linolénique, ricinoléique, eicosénoïque et docosénoïque, que l'on trouve habituellement dans les huiles de pin (Tall oil fatty acids), colza, maïs, tournesol, soja, pépins de raisin, lin, jojoba, ainsi que les acides eicosapentaénoïque et docosahexaénoïque que l'on trouve dans les huiles de poissons.

Le composé (A) peut être un mélange de trimère d'acide gras et de diacides choisis parmi un acide alkyldicarboxylique linéaire tel que l'acide glutarique, l'acide adipique, l'acide pimélique, l'acide subérique, l'acide azélaïque, l'acide sébacique, l'acide undécanedioïque, l'acide dodécanedioïque, l'acide brassylique, l'acide tétradécanedioïque, l'acide pentadecanedioïque, l'acide thapsique, l'acide octadécanedioïque ou ramifié comme l'acide 3,3-diméthyl glutarique.

On peut citer comme exemples de trimères d'acides gras, les composés de formules suivantes qui illustrent les trimères cycliques issus d'acides gras à 18 atomes de carbone, sachant que les composés disponibles dans le commerce sont des mélanges d'isomères stériques et d'isomères de position de ces structures, éventuellement partiellement ou totalement hydrogénés.

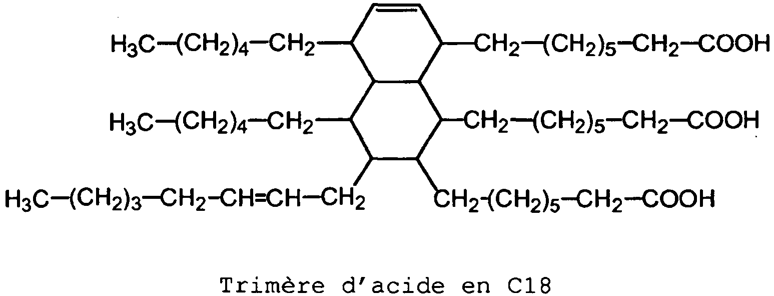

On peut ainsi utiliser un mélange d'oligomères d'acides gras contenant des dimères, trimères et monomères d'acides gras en C₁₈ linéaires ou cycliques, ledit mélange étant majoritaire en dimères et trimères et contenant un faible pourcentage (habituellement, moins de 5%) de monomères. De manière préférée, ledit mélange comprend :
- 0,1 à 40% en poids, de préférence 0,1 à 5% en poids de monomères d'acides gras identiques ou différents,
- 0,1 à 99% en poids, de préférence 18 à 85% en poids de dimères d'acides gras identiques ou différents, et
0,1 à 90% en poids, de préférence 5 à 85% en poids, de trimères d'acides gras identiques ou différents.

De manière encore plus préférée, ledit mélange de molécules dérivées d'acides gras a une masse moléculaire moyenne supérieure à 400 g/mol.

On peut citer, comme exemples de mélanges dimères/trimères d'acides gras (% en poids) :
- le Pripol® 1017 d'Uniqema, mélange de 75-80% de dimères et 18-22% de trimères avec de l'ordre de 1-3 % d'acides gras monomères,
- le Pripol® 1048 d'Uniqema, mélange de 50/50% de dimères/trimères,
- le Pripol® 1013 d'Uniqema, mélange de 95-98% de dimères et de 2-4% de trimères avec 0,2 % maximum d'acides gras monomères,
- le Pripol® 1006 d'Uniqema, mélange de 92-98% de dimères et d'un maximum de 4% de trimères avec 0,4 % maximum d'acides gras monomères,
- le Pripol® 1040 d'Uniqema, mélange de dimères et de trimères d'acide gras avec au moins 75% de trimères et moins de 1% d'acides gras monomères,
- l'Unidyme® 60 d'Arizona Chemicals, mélange de 33% de dimères et de 67% de trimères avec moins de 1% d'acides gras monomères,
- l'Unidyme® 40 d'Arizona Chemicals, mélange de 65% de dimères et de 35% de trimères avec moins de 1% d'acides gras monomères,
- l'Unidyme® 14 d'Arizona Chemicals, mélange de 94% de dimères et de moins de 5% de trimères et autres oligomères supérieurs avec de l'ordre de 1% d'acides gras monomères,
- l'Empol® 1008 de Cognis, mélange de 92% de dimères et de 3% d'oligomères supérieurs, essentiellement des trimères, avec de l'ordre de 5% d'acides gras monomères,
- l'Empol® 1018 de Cognis, mélange de 81 % de dimères et de 14% d'oligomères supérieurs, dont essentiellement des trimères, avec de l'ordre de 5 % d'acides gras monomères,
- le Radiacid® 0980 d'Oleon, mélange de dimères et trimères avec au moins 70% de trimères.
- le Radiacid® 0950 de Oleon, mélange de 79 - 85% de dimères et de 13 - 19% de trimères d'acide gras avec de l'ordre de 1 - 3 % d'acides gras monomères.

Les produits Pripol®, Unidyme®, Empol®, et Radiacid® comprennent des monomères d'acides gras en C₁₈ et des oligomères d'acides gras correspondant à des multiples de C₁₈.

Selon un mode de réalisation particulier, le mélange de diacide et triacide carboxylique peut être partiellement ou totalement remplacé par un dérivé de diacide(s) et triacide(s), ce dérivé étant choisi parmi un sel d'acide, un ester d'acide et un chlorure d'acide.

A titre d'exemple d'ester, on peut citer un ester méthylique, éthylique, ou isopropylique d'un acide gras tel que défini ci-dessus.

Un ester d'acide gras préféré est un ester méthylique d'acide gras, et en particulier un ester méthylique de dimère d'acide gras ou d'un mélange d'oligomères d'acide gras tels que défini ci-dessus.

A titre d'exemple de chlorure d'acide gras, on peut citer le chlorure de sébacoyle.

De son côté, le composé (B) porte au moins un groupe réactif qui peut notamment être choisi parmi les groupes amine primaire ou secondaire ou alcool. En variante, le composé (B) peut porter au moins deux tels groupes identiques ou différents. On préfère selon l'invention que le composé (B) porte au moins une fonction amine primaire.

Dans le cas notamment où le groupe réactif du composé (B) est susceptible de réagir à la fois avec les premières et secondes fonctions du composé (A), on préfère que, dans la première étape du procédé, le rapport du nombre des groupes réactifs du composé (B) à la somme des fonctions du composé (A) aille de 0,05 à 0,8 et de préférence de 0,15 à 0,7.

Le composé (B) peut ainsi répondre à l'une quelconque des formules (B1) à (B5) : 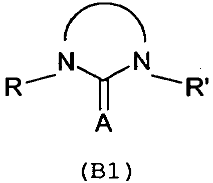 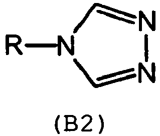 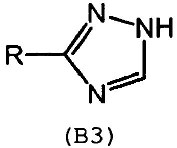 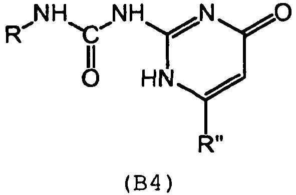 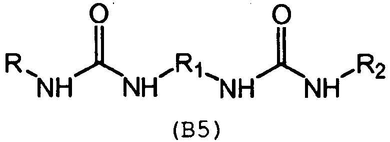 où :
R désigne un motif contenant au moins une fonction réactive,
R' désigne un atome d'hydrogène,
R", R1 et R2 désignent des groupes quelconques,

A désigne un atome d'oxygène ou de soufre ou un groupement -NH, de préférence un atome d'oxygène.

Des exemples préférés de composés (B) sont la 2-aminoéthylimidazolidone (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), la N-(6-aminohexyl)-N'-(6-méthyl-4-oxo-1,4-dihydropyrimidin-2-yl)urée (UPy), le 3-amino-1,2,4-triazole et le 4-amino-1,2,4-triazole. L'UDETA est préférée pour une utilisation dans la présente invention.

Certains de ces composés peuvent être obtenus par réaction de l'urée avec une polyamine. Par exemple, l'UDETA, l'UTETA et l'UTEPA peuvent respectivement être préparées en faisant réagir de l'urée sur la diéthylène triamine (DETA), la triéthylène tétramine (TETA) et la tétraéthylène pentamine (TEPA).

La réaction du composé (B) avec le composé (A) peut par exemple être effectuée à une température comprise entre 20 et 200°C, de préférence entre 130 et 170°C, pendant une durée allant de 1 à 15 h, par exemple de 3 à 9 h, avantageusement sous agitation et sous atmosphère inerte.

Ce composé est alors mis à réagir, avec un composé au moins bifonctionnel (C), de telle manière que les fonctions de (C) réagissent avec les secondes fonctions, c'est-à-dire les fonctions réactives restantes, du composé (A). On évitera dans cette étape de se placer dans des conditions catalytiques susceptibles de conduire à une homopolymérisation du composé (C).

Le composé (C) porte au moins deux fonctions, identiques ou différentes, choisies notamment parmi les fonctions époxy, alcool et amine.

Le composé (C) peut être un diépoxyde. Il peut ainsi être choisi parmi : les bisphenol A diglycidyl éther, bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther, polypropylène glycol diglycidyl éther, polytétraméthylène glycol diglycidyl éther, résorcinol diglycidyl éther, néopentylglycol diglycidyl éther, bisphenol A polyéthylène glycol diglycidyl éther, bisphénol A polypropylèneglycol diglycidyl éther, diglycidyl ester d'acide téréphtalique, les acides gras polyinsaturés époxydés, et limonène époxydé; et leurs mélanges.

En variante, le composé (C) peut être un polyépoxyde renfermant au moins trois fonctions époxyde, choisi par exemple parmi : le triglycidyl éther d'huile de ricin, le 1,1,1-tris(hydroxyméthyl)propane triglycidyl éther, le trisphénol triglycidyl éther, le glycérol tridlycidyl éther, le glycérol propoxylate triglycidyl éther, le glycérol éthoxylate triglycidyl éther, le triméthylol propane triglycidyl éther, le sorbitol polyglycidyl éther, le polyglycérol polyglycidyl éther, le pentaérythritolpolyglycidyl éther, le poly(glycidyl acrylate), le polyglycïdyl méthacrylate, les acides gras polyinsaturés époxydés, les huiles végétales époxydées, les huiles de poisson époxydées et le limonène époxydé.

En variante encore, le composé (C) peut être un diol. Dans ce cas, le composé (C) peut être choisi parmi : l'éthylène glycol, le propylène glycol, le tétraméthylène glycol, l'hexaméthylène glycol, l'octanediol, le nonanediol, le décanediol, le diéthylène glycol, le dipropylène glycol, le triéthylène glycol, le tétraéthylène glycol, le polyéthylène glycol, le polypropylène glycol, le polytétraméthylène glycol, les polyesters à extrémités hydroxy, polybutadiènes à extrémités hydroxy, polydiméthylsiloxanes à extrémités hydroxy, polyisobutylènes à extrémités hydroxy, les copolymères polybutadiène-co-acrylonitrile à extrémités hydroxy, les dimères diols issus d'acides gras et leurs mélanges.

Selon une autre possibilité, le composé (C) peut être un polyol renfermant au moins trois fonctions alcool. Des exemples de tels composés sont notamment : les sucres tels que le sorbitol, le pentaérythritol, le triméthylolpropane, ainsi que le glycérol et ses dérivés éthoxylés et propoxylés, l'huile de ricin (castor oil) et les dimères diols issus d'acides gras tels le Pripol 2033 de Uniqema.

Selon une autre possibilité, le composé (C) peut être une polyamine. La polyamine peut être tout composé portant au moins deux fonctions amine, de préférence amine primaire, et de préférence un composé de formule (I) :

H₂N-(CHR₁)ₘ-(CHR₂)ₙ-[NH-(CH₂)ₓ]_{y}-NH-(CHR₃)ₚ-(CHR₄)_{q}-NH₂ (I)

dans laquelle :
R1, R2, R3 et R4 désignent indépendamment un atome d'hydrogène ou un groupe alkyle en C1-C6 tel qu'un groupe méthyle,
m, n, p et q désignent indépendamment un nombre entier allant de 1 à 3,
x désigne un nombre entier allant de 1 à 6,
y désigne un nombre entier allant de 0 à 2.

Dans la formule (I) ci-dessus, au moins l'une, et de préférence toutes, les conditions ci-dessous sont satisfaites :
- R1, R2, R3 et R4 désignent un atome d'hydrogène,
- m + n est égal à 2, 3 ou 6, de préférence à 2,
- p + q est égal à 2, 3 ou 6, de préférence à 2,
- x désigne un nombre entier allant de 2 à 4,
- y est égal à 0 ou 1, de préférence à 0.

Des exemples préférés de polyamines de formule (I) sont la DETA (diéthylène triamine), la TETA (triéthylène tétramine), la TEPA (tétraéthylène pentamine) et la dihexylène triamine.

En variante, la polyamine peut être une alkylène diamine linéaire contenant 3 à 40 atomes de carbone telle que la cadavérine, la putrescine, l'hexaméthylène diamine ou le 1,12-diaminododécane ou une alkylène diamine cyclique telle que l'isophorone diamine.

La réaction de la polyamine (composé (C)) avec le mélange de diacide/triacide carboxylique ou leurs dérivés sel, ester ou chlorure d'acide utilisé (composé (A)), peut, par exemple, être effectuée à une température comprise entre 20 et 200°C, de préférence entre 140 et 180°C, pendant une durée allant de 1 à 24 h, par exemple de 6 à 8 h, avantageusement sous agitation et sous atmosphère inerte.

Dans un mode de réalisation préféré, le composé (A) est un mélange de polyacides carboxylique ou son dérivé sel, ester ou chlorure d'acide mis à réagir, avec au moins un composé (C) qui est une polyamine, dans un rapport molaire des fonctions amine aux fonctions acide de l'acide dicarboxylique compris entre 0,95 et 0,0,2 et de préférence entre 0,85 et 0,3.

Le polymère supramoléculaire mis en oeuvre dans les compositions objets de l'invention est issu de la réaction du composé (A), avec le composé (B) et avec le composé (C) Ces réactions peuvent être effectuées simultanément ou successivement. Dans le cas où ces réactions sont conduites successivement, la réaction du composé (A) avec le composé (B) sera réalisée de préférence en premier mais l'ordre inverse est également possible. Elles peuvent en outre être effectuées soit dans des réacteurs distincts, soit dans le même réacteur, sans qu'il ne soit nécessaire de prévoir une étape de lavage ou de purification après la première de ces réactions.

On préfère que le polymère supramoléculaire renferme également des liaisons hydrophobes intermoléculaires, avantageusement dues à des interactions entre des groupes alkyle portés par chacune des molécules trifonctionnelles décrites précédemment. Par "alkyle", on entend au sens de l'invention des groupes latéraux (CnH2n+1) et non pas des chaînes alkylène (CnH2n), par exemple. De façon particulièrement préférée, chacune de ces molécules comporte des chaînes alkyle en C6-C24, avantageusement en plus grand nombre que lesdits groupes associatifs terminaux. Ils peuvent notamment être apportés par les composés (A), en particulier lorsqu'il s'agit de trimères d'acides gras.

Dans un mode de réalisation particulier, le polymère supramoléculaire défini ci-dessus est amené à réagir avec de l'urée.

Ainsi, de préférence, le produit résultant de la réaction d'au moins un composé (A) avec au moins un composé (B) et au moins un composé (C) est mis à réagir avec de l'urée pour constituer des jonctions di(amidoéthyl)urée, diamidotétraéthyl triurée et/ou urée.

La réaction peut par exemple être conduite à une température de 110 à 180°C, de préférence de 120 à 160°C en réalisant une rampe de température, pendant une durée allant de 30 minutes à 24 h, de préférence pendant une durée de 1 à 6 heures, sous atmosphère inerte et, avantageusement, sous agitation. Là encore, cette réaction peut être effectuée dans un réacteur séparé de celui ou ceux utilisés dans la ou les étapes précédentes, ou dans le même réacteur. On comprend donc que toutes les étapes du procédé d'obtention du polymère supramoléculaire peuvent être mises en oeuvre dans le même réacteur, par addition successive des réactifs, ce qui rend le procédé particulièrement simple et économique.

L'urée a pour fonction, dans cette étape, de créer des groupes associatifs supplémentaires, par exemple selon les schémas réactionnels suivants :

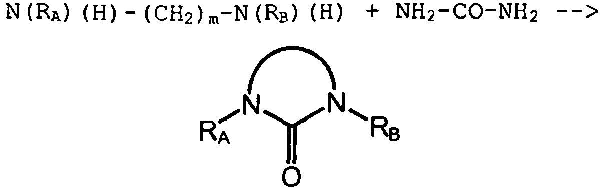

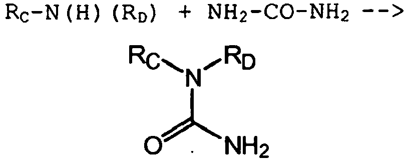

Les composés (A), (B) et (C) décrits précédemment peuvent être introduits, à l'état fondu, à l'état solide pulvérulent ou non pulvérulant, ou par voie liquide, par exemple en solution ou dispersion aqueuse. On préfère toutefois qu'ils soient introduits à l'état solide pulvérulent ou à l'état fondu pour éviter le recours à des solvants nécessitant d'être ultérieurement éliminés.

Lorsque le procédé d'obtention du polymère supramoléculaire comporte une dernière étape de réaction avec l'urée, donc, en plus des réactions de (A) avec (B) et (C), il est préféré que le composé (C) soit une polyamine comme décrit ci-dessus, et il est particulièrement préféré que le composé (C) soit la diéthylène triamine ou DETA.

Les proportions de (A), (B) et (C) utilisées dans le procédé de synthèse du polymère supramoléculaire, ainsi que leur nature, et le choix d'effectuer ou non une étape supplémentaire de réaction avec l'urée, déterminent les caractéristiques mécaniques dudit polymère. Ainsi, il est possible d'obtenir des propriétés mécaniques allant de celles d'un élastomère à celles d'un plastomère. Ces paramètres déterminent également les propriétés de solubilité dudit polymère. Ainsi, il est possible que le polymère supramoléculaire soit complètement ou partiellement soluble dans des solvants polaires comme les alcools.

Selon un mode de réalisation de l'invention, le nombre moyen de groupes associatifs par molécule est d'au moins 1,2, de préférence d'au moins 2 voire d'au moins 2,2.

Les polymères supramoléculaires mis en oeuvre dans les compositions objets de l'invention, présentent avantageusement des propriétés élastomériques , comme celle de l'élasticité caoutchoutique ou hyperélasticité, c'est-à-dire, la propriété de pouvoir être soumis à une déformation uniaxiale à sa température d'utilisation, par exemple à température ambiante, d'au moins 20%, par exemple pendant 15 minutes, et de recouvrer, une fois cette contrainte relâchée, l'essentiel de sa dimension initiale, par exemple, avec une déformation rémanente inférieure à 5% de sa dimension initiale.

Ces polymères supramoléculaires peuvent, par ailleurs être capables d'auto-cicatrisation après une coupure et présenter, après remise en contact des bords de la découpe, des propriétés encore élastomériques leur permettant de subir, par exemple, une déformation en traction d'au moins 20%, voire d'au moins 100% avant rupture et de recouvrer l'essentiel de leurs dimensions initiales une fois la contrainte relâchée, avec, par exemple, une déformation rémanente inférieure à 10% de leur dimension initiale.

Les polymères supramoléculaires définis ci-dessus sont des matériaux sous forme de solides mous, qu'il est nécessaire d'extraire du réacteur ayant servi à leur synthèse. Selon une variante préférée, le produit peut être extrait du réacteur à l'état liquide et « fini » par un traitement thermique en étuve, four, bandes chauffantes ou tout autre équipement adapté, jusqu'à sa transformation en un solide mou. Le polymère supramoléculaire peut être découpé ou broyé, notamment à froid, par exemple dans un broyeur à marteaux, à billes, à boules, à meules ou à couteaux puis lavé, par exemple à l'eau, et éventuellement mis en forme, notamment par pressage à chaud, calandrage, thermoformage ou toute autre méthode.

De manière préférée, le polymère supramoléculaire, éventuellement lavé à l'eau, est découpé grossièrement en bandes ou en morceaux, puis mélangé à l'élastomère.

### Additifs

La composition objet de l'invention peut être utilisée en tant que telle ou dans des mélanges monophasiques ou polyphasiques avec un ou plusieurs composés tels que les coupes pétrolières, les solvants, les charges minérales et organiques, les plastifiants, les résines tackifiantes, les « aides de process » ou aides à la mise en oeuvre, les lubrifiants, les anti-oxydants, les additifs anti-radiation, (anti-UV), les pigments et/ou les colorants.

En particulier, des additifs susceptibles d'être ajoutés à la composition selon l'invention sont notamment :
- les lubrifiants, tels que l'acide stéarique et ses esters, les esters cireux , les cires de polyéthylène, la paraffine ou les lubrifiants acryliques
- les colorants
- les pigments minéraux ou organiques, tels que ceux décrits dans le document " Plastics Additives and Modifiers Handbook, Section VIII, Colorants ", J. Edenbaum, Ed., Van Nostrand, pages 884-954. A titre d'exemples de pigments utilisables, on peut citer le noir de carbone, le dioxyde de titane, l'argile, les particules métalliques ou les particules de mica traité de la marque IRIODIN® commercialisées par MERCK,
- les plastifiants tels que les esters, comme les phtalates ou les adipates, les éthers, comme le di-méthyl iso sorbide, les amides
- les stabilisants thermiques et/ou UV, tels que les stéarates d'étain, de plomb, de zinc, de cadmium, de baryum ou de sodium, dont le Thermolite^{®} d'ARKEMA,
- les co-stabilisants tels que les huiles naturelles époxydées,
- les anti-oxydants, par exemple phénoliques, soufrés ou phosphitiques,
- les charges ou renforts, notamment des charges cellulosiques, du talc, du carbonate de calcium, du mica ou de la wollastonite, du verre ou des oxydes ou hydrates métalliques,du noir de carbone, de la silice,
- les agents antistatiques,
- les fongicides et biocides,
- les agents gonflants servant à la fabrication de pièces expansées, tels que les azodicarbonamides, l'azo bis isobutyronitrile, le diéthyl azo-bis isobutyrate,
- les agents ignifugeants, dont le trioxyde d'antimoine, le borate de zinc et les phosphate esters bromés ou chlorés,
- les solvants, et
- leurs mélanges.

La composition objet de l'invention peut notamment être utilisé pour fabriquer des joints d'étanchéité, des bouchons ou des septa, des jouets, des isolants thermiques ou acoustiques, des pneumatiques, des bandes de roulement pour pneumatiques, ou toute autre partie d'un pneumatique, des câbles, des gaines, des semelles de chaussures, des emballages, des revêtements (peintures, films, produits cosmétiques), comme des revêtements anticorrosion, des patchs (cosmétiques ou dermo-pharmaceutiques) ou autres systèmes de piégeage et relarguage d'actifs, des pansements, des colliers de serrage élastiques, des tubes à vide, des tubes et flexibles de transport de fluides, et d'une manière générale les pièces devant présenter de bonnes résistance à la déchirure et/ou à la fatigue, des additifs rhéologiques, des additifs pour le bitume ou des additifs pour colles thermofusibles et adhésifs.

L'invention a donc également pour objet l'utilisation de la composition objet de l'invention aux fins précitées.

L'invention sera mieux comprise à la lumière des exemples suivants, donnés à des fins d'illustration seulement et qui n'ont pas pour but de restreindre la portée de l'invention, définie par les revendications annexées.

### EXEMPLES

### Exemple 1 Préparation d'un polymère supramoléculaire

### Première étape:

- Sous-étape a: Dans un réacteur de diamètre 60 mm et de volume nominal 500 ml équipé d'une vanne de fond, d'une régulation de température par fluide caloporteur, d'une agitation mécanique, d'une ampoule de coulée, d'un Dean-Stark et d'une entrée de gaz, préchauffé à 40°C, on introduit 76g d'Empol® 1016 [indice d'acide 194, taux de monomère (4%), dimère (80%), trimère (16%)] et 6,7g d'UDETA purifiée (52 mmol) soit un rapport [NH2]/[COOH] de 0,2. La température du bain est portée à 150°C pendant 8 heures sous un flux d'azote de 500 ml/minute et une agitation de 280 tours/min. Durant cette étape, on constate par spectroscopie infrarouge la diminution du signal du δNH2 (1505 cm-1), l'augmentation du signal νC=0 (1648 cm-1) et le dégagement de vapeur d'eau. L'arrêt de la réaction est décidé lorsque cesse le dégagement de vapeur d'eau (8 heures dans l'exemple présent).

Après cette sous-étape, le produit de la réaction est stocké à 50°C dans le réacteur.
- Sous-étape b: On utilise le même montage et les mêmes conditions (azote, agitation) que précédemment. 10,7 g (104 mmol) de diéthylène triamine (pureté 98 %) sont placés dans l'ampoule de coulée.

Le corps du réacteur est chauffé à 160°C et l'amine est ajoutée lentement au goutte à goutte par intermittence sur une durée totale de 3h. On laisse la réaction se poursuivre encore 4h à 160°C. Durant cette deuxième étape on constate par spectroscopie infrarouge le même type d'évolution que précédemment. La fin du dégagement de vapeur d'eau, là encore constaté, est utilisée comme critère d'arrêt de la réaction.

Après cette étape, le produit est recueilli par la vanne de fond (on recueille 86g) et stocké à température ambiante. Il se présente comme un liquide viscoélastique fortement adhésif sur de nombreux substrats notamment sur le verre, sur le métal et sur le papier. La température de transition vitreuse mesurée par DSC (calorimétrie différentielle à balayage) est de -11°C. Des mesures rhéologiques réalisées en géométrie plans parallèle avec une déformation imposée de 1% ont fourni, à la fréquence de sollicitation de 1 rad/s les résultats suivants:

| T (°C) | 25 | 35 | 50 | 70 | 90 |
|---|---|---|---|---|---|
| G' (Pa) | 33078 | 9812 | 1884 | 234 | 34 |
| G" Pa) | 49311 | 17568 | 4695 | 947 | 225 |

### Deuxième étape:

Dans un réacteur large (diamètre 100 mm) de volume nominal 500 ml équipé d'une régulation de température par fluide caloporteur, d'une agitation mécanique et d'une entrée de gaz préchauffé à 80°C, on introduit 67 g du produit précédent et 6,1 g d'urée. L'agitation est réglée à 50 tours/min et la température est portée à 135°C. Au bout d'une demi-heure à cette température et dans toute la suite du processus, on constate à l'aide d'un papier indicateur de pH un dégagement conséquent d'ammoniac. Durant toute cette étape, le suivi de la réaction par spectroscopie infrarouge révèle la diminution du signal de l'urée vC=0 1675 cm-1.

La température est maintenue au total deux heures à 135°C, puis 1 heure à 140°C, puis une heure à 145°C. A ce stade, on constate que le mélange réactionnel initialement trouble tend à devenir transparent. On ajoute un gramme d'eau et la solution redevient trouble. Le mélange est porté à 150°C pendant encore environ 1h, pendant laquelle on constate une diminution du dégagement d'ammoniac.

Le critère d'arrêt est cette fois que le produit prend en masse et s'accroche à l'axe de l'agitateur. Dès que c'est le cas, on recueille le produit sur la tige d'agitation.

### Mise en forme:

Les morceaux obtenus sont placés dans un sac en plastique et broyés à froid au marteau. Les fragments de taille 1 à 2 mm sont lavés par immersion dans l'eau pendant 72h. Dans l'eau, les fragments mis au lavage ont tendance à se coller les uns aux autres. On redécoupe l'échantillon, préalablement égoutté, en morceaux de taille 5 mm environ qu'on place dans un moule constitué d'une plaque de laiton d'épaisseur 1,6 mm percée d'un trou rectangulaire, placée entre deux feuilles de papier antiadhésif. Après un premier pressage à 120°C pendant 10 minutes (pression appliquée 10 MPa), le film obtenu présente des irrégularités d'épaisseur qu'on corrige par ajout de matière et repressage jusqu'à obtention d'un aspect satisfaisant.

### Exemple 2 Préparation d'un mélange élastomère/ polymère supra moléculaire

### Mélange initial en mélangeur interne

Dans un mélangeur interne BRABENDER N50, équipé d'une sonde de température et d'une mesure de couple, tournant à 50 tours par minute, on introduit, à température ambiante les proportions voulues de chacun des composants du mélange élastomère/polymère supramoléculaire, de manière à ce que la masse totale des produits introduits ne dépasse pas 70 g. Dans cet exemple, l'élastomère est un poly isoprène de synthèse NATSYN 2200 de la société GOOD YEAR de température de transition vitreuse de -63°C plus ou moins 2°C, mesurée dans un appareil de DSC Q 10 de TA INSTRUMENTS, à une vitesse de rampe de 10°C/min, et le polymère supramoléculaire est celui de l'exemple 1. On laisse tourner le mélange qui, par auto-échauffement montera en température, pendant 5 à 10 min. Pendant ce temps, la température a tendance à se stabiliser à une valeur inférieur à 90 °C, et le couple mécanique atteint également une valeur stable. Après le temps de mélange, le mélangeur est arrêté, et le mélange résultant en est extrait.

### Calandrage

Le mélange résultant est passé à température ambiante dans un mélangeur à cylindres GUMIX tournant à 11 tours/min, jusqu'à l'obtention d'une galette la plus homogène possible.

### Obtention de plaques pressées

Le mélange calandré est, ensuite coupé en morceaux, et un moule métallique carré de 15x15 cm pour 2 mm d'épaisseur est rempli avec ces morceaux. Pour faciliter le démoulage deux feuilles de papier siliconé (kraft siliconé blanc 120g/m2) sont placées en dessus et en dessous du moule. Le tout est mis dans une presse hydraulique marque GIBITRE INSTRUMENT® chauffée à 150-160°C pendant un temps de pressage de 10 minutes, sous une pression de 200 bars. A la fin du temps de pressage, la presse est refroidie sans relâcher la pression et lorsque la température atteint 35 °C, la pression est relâchée et la presse est ouverte pour extraire la plaque pressée.

### Conditionnement et découpage des éprouvettes de traction

A l'aide d'un emporte pièce en haltère de type 5A [selon Norme : ISO 527] des éprouvettes de traction sont découpées directement sur la plaque pressée obtenue précédemment, après avoir laissé celle-ci s'équilibrer en salle climatisée à une température de 21°C (+/- 2°C) et une humidité relative de 50% (+/- 10%).

On procède de manière analogue pour obtenir des éprouvettes des deux élastomères, classique (caoutchouc naturel) et supra moléculaire, non mélangés, à titre de référence. Dans le cas où des charges ou additifs, sont utilisés, ils sont alimentés pendant l'étape de préparation du mélange en mélangeur interne.

### Tests mécaniques de traction

Les tests de traction sont réalisés sur les éprouvettes de type 5A conditionnées comme décrit ci-dessus. Ces éprouvettes en forme d'haltère mesurent 75 mm de longueur avec une longueur utile, partie prisme rectangulaire centrale, de 25 mm pour 4 mm de largeur, et une épaisseur obtenue pour le moulage de plaques, de 2 mm. La traction est effectuée dans une machine de traction INSTRON 5565 à une vitesse de déplacement de la traverse de 500 mm/min. La machine est équipée d'un capteur de force et l'écartement entre les mors tenant l'éprouvette est automatiquement enregistré, après ajustement du point zéro initial avant le début de l'essai. Des courbes de force en fonction du déplacement ou, de contrainte nominale, définie comme la force au temps/déplacement donné divisée par la section de l'échantillon au temps/déplacement zéro, sont obtenues en fonction du déplacement de la traverse ou du pourcentage de déformation, calculé comme 100 x (déplacement à un temps donné - longueur initiale) / (longueur initiale). Les valeurs de contrainte et de pourcentage de déformation à la rupture de l'échantillon sont relevées. Il est également possible de calculer l'aire sous la courbe contrainte nominale par rapport au pourcentage de déformation. La valeur ainsi obtenue est proportionnelle à l'énergie appliquée pour casser l'échantillon et est une mesure de sa résilience ou résistance à la rupture.

Le tableau I montre les valeurs de contrainte nominale à la rupture, de déformation à la rupture et d'aire sous la courbe contrainte par rapport à pourcentage de déformation pour un élastomère qui est un polyisoprène de synthèse non réticulé, un polymère supramoléculaire préparé selon l'exemple 1 et pour un mélange équipondéral (50/50 % en poids) de ces deux produits. Les valeurs correspondent à des moyennes sur 3 éprouvettes.

**Tableau I Propriétés mécaniques d'un mélange et de ses composants**

| Produit | Contrainte à la rupture (MPa) | Déformation à la rupture (%) | Aire sous la courbe [MPa x100 mm/mm] |
|---|---|---|---|
| Poly isoprène non réticulé | 0,65 | 469 | 207 |
| Polymère supramoléculaire | 1,45 | 275 | 209 |
| Mélange 50/50 | 1,61 | 600 | 518 |

Il peut être remarqué que le mélange présente de meilleures propriétés mécaniques que celles de ses deux composants. De plus, la tenue à froid du polymère supramoléculaire est améliorée, car celui-ci seul, c'est-à-dire, en absence de polyisoprène, devient cassant à une température proche de 0°C, alors que le mélange du tableau I reste souple après plusieurs heures dans un congélateur à -15°C. La vitesse de retour élastique après déformation est également améliorée, par rapport à celle du polymère supramoléculaire seul. D'un point de vue de l'autocicatrisation, les 3 produits du tableau I présentent la faculté de se réparer partiellement après cassure et recollage des morceaux.

### Exemple 3 Préparation d'une série de mélanges élastomère (polyisoprène)/polymère supramoléculaire à différentes compositions et en présence de 10% en poids de noir de carbone.

Des mélanges de différentes proportions de d'élastomère (polyisoprène de synthèse) et de polymère supramoléculaire de l'exemple 1, ont été préparés selon le mode opératoire de l'exemple 2, en rajoutant 10% en poids par rapport au mélange total de noir de carbone (CORAX N550® de DEGUSSA), pendant l'étape de mélange en mélangeur interne. Des éprouvettes de traction ont été préparées et conditionnées et le test de traction décrit dans l'exemple 2 a été réalisé. Le Tableau II montre les résultats obtenus. Les valeurs correspondent à des moyennes sur 3 éprouvettes.

**Tableau II. Propriétés mécaniques des mélanges et de leurs composants chargés (le premier chiffre des mélanges correspond au % en poids de polyisoprène et le deuxième, à celui du polymère supra moléculaire)**

| Produit | Contrainte à la rupture (MPa) | Déformation à la rupture (%) | Aire sous la courbe [MPa x 100 mm/mm] |
|---|---|---|---|
| Polyisoprène non réticulé chargé 10% N550 | 0,3 | 435 | 113 |
| Polymère supramoléculaire chargé 10% N550 | 2,91 | 261 | 355 |
| Mélange 10/90 chargé 10% N550 | 2,94 | 319 | 457 |
| Mélange 30/70 chargé 10% N550 | 3,42 | 381 | 635 |
| Mélange 50/50 chargé 10% N550 | 2,21 | 521 | 626 |
| Mélange 70/30 chargé 10% N550 | 0,95 | 546 | 313 |
| Mélange 90/10 chargé 10% N550 | 0,37 | 526 | 164 |

Il peut être remarqué que les mélanges riches en polymère supra moléculaire (10 et 30% de polyisoprène) présentent des propriétés améliorées par rapport au polymère supramoléculaire chargé, mais sans polyisoprène. Dans le cas du mélange à 30% de polyisoprène, l'amélioration est particulièrement prononcée. De manière surprenante, l'introduction de 30% de polyisoprène (produit plus mou, à plus faible contrainte à la rupture que l'élastomère supra moléculaire) augmente significativement la contrainte à la rupture du polymère supramoléculaire chargé. Lorsque les mélanges s'enrichissent en polyisoprène non réticulé, les propriétés se rapprochent de celles de la référence polyisoprène non réticulé chargé, tout en restant en termes d'énergie de rupture (qui peut refléter le compromis obtenu entre les effets sur la contrainte et sur la déformation à la rupture), supérieures à celle de la référence ne contenant pas le polymère supra moléculaire.

D'un point de vue de l'autocicatrisation, tous les mélanges du tableau I présentent à des degrés divers la faculté de se réparer partiellement après cassure et recollage des morceaux.

### Exemple 4 : Préparation d'une série de mélanges équipondéraux polyisoprène / polymère supramoléculaire non chargés, à différents taux de réticulation par un agent réticulant peroxyde

Des mélanges équipondéraux en caoutchouc naturel et polymère supra moléculaire de l'exemple 1 ont été préparés, selon la méthode décrite dans l'exemple 2, avec l'ajout de différents quantités d'un agent réticulant peroxyde, le LUPEROX DCP® commercialisé par la société ARKEMA (peroxyde de dicumyle). L'ajout du peroxyde s'est fait pendant l'étape de mélange en mélangeur interne, étape pendant laquelle le mélange ne dépasse pas la température de 90°C, et la réticulation a été effectuée pendant l'étape de mise en forme sous presse. Les conditions de réticulation ont été de 15 minutes à 175°C et 200 bars, sous presse. Les taux d'ajout d'agent réticulant peroxyde ont été de 0,07%, 0,35%, 0,7% et 1% de peroxyde par rapport au total du mélange polyisoprène/polymère supra moléculaire. Des éprouvettes de traction ont été préparées et conditionnées comme décrit dans l'exemple 2 et des essais en traction ont été réalisés. Le Tableau III montre les résultats obtenus. Les valeurs correspondent à des moyennes sur 3 éprouvettes.

**Tableau III**

| Produit | Contrainte à la rupture (MPa) | Déformation à la rupture (%) | Aire sous la courbe [MPa x 100 mm/mm] |
|---|---|---|---|
| Mélange 50/50 plus 0,07% de peroxyde | 3,38 | 793 | 1191 |
| Mélange 50/50 plus 0,35% de peroxyde | 8 | 857 | 2550 |
| Mélange 50/50 plus 0,7% de peroxyde | 7,1 | 675 | 1634 |
| Mélange 50/50 plus 1% de peroxyde | 6,13 | 593 | 1275 |
| Polymère supramoléculaire seul plus 0,07% de peroxyde | 1,42 | 342 | 180 |
| Polymère supramoléculaire seul plus 0,35% de peroxyde | 2 | 355 | 235 |
| Polymère supramoléculaire seul plus 0,7% de peroxyde | 1,82 | 274 | 184 |
| Polymère supramoléculaire seul plus 1% de peroxyde | 1,62 | 245 | 162 |
| Polyisoprène plus 0,07% de peroxyde | 1,71 | 1034 | 746 |
| Polyisoprène plus 0,35% de peroxyde | 2,88 | 718 | 865 |
| Polyisoprène plus 0,7% de peroxyde | 4,51 | 719 | 1273 |
| Polyisoprène plus 1% de peroxyde | 5,26 | 643 | 1351 |

Il peut être remarqué que l'ajout d'un peroxyde et la réticulation à chaud du mélange équipondéral avec ce peroxyde a un effet très important sur les propriétés mécaniques. Par rapport au mélange 50/50 de l'exemple 2, le fait de réticuler améliore nettement les propriétés mécaniques. Cet effet de la réticulation, comme attendu est constaté sur le polyisoprène tout seul : après une augmentation considérable de la contrainte et de la déformation à la rupture pour un faible taux de réticulation, par rapport au polyisoprène non réticulé de l'exemple 2, la contrainte à la rupture évolue en augmentant et la déformation à la rupture, en diminuant, en fonction du taux de réticulant. Sur le polymère supramoléculaire, en revanche, l'effet de l'agent réticulant peroxyde est beaucoup plus modeste et évolue différemment : contrainte, déformation à la rupture et énergie de rupture passent par un optimum. C'est cette tendance de passage par un optimum qu'on observe aussi pour le mélange 50/50 réticulé, au même taux d'agent réticulant de 0,35%.

Du point de vue de l'autocicatrisation, tous les mélanges du tableau I présentent la faculté de se réparer partiellement après cassure et recollage des morceaux.

La tenue à froid de l'élastomère supra moléculaire est, comme pour les mélanges non réticulés, meilleure dans les mélanges réticulés que pour l'élastomère supra moléculaire seul réticulé ou non. Enfin, la vitesse de retour élastique est sensiblement améliorée pour les mélanges réticulées, par rapport à celle de l'élastomère supramoléculaire seul.

## Revendications

1. Composition comprenant :
(i) au moins un élastomère qui est choisi parmi le caoutchouc naturel et un polymère ou copolymère de synthèse issu de la polymérisation d'une majorité de monomères de masse moléculaire inférieure à 400 g/mol ; et
(ii) au moins un polymère supramoléculaire susceptible d'être obtenu par la réaction d'au moins un composé au moins trifonctionnel (A) porteur de premières et secondes fonctions avec :
- au moins un composé (B) portant, d'une part, au moins un groupe réactif susceptible de réagir avec les premières fonctions de (A) et, d'autre part, au moins un groupe associatif ; et
- au moins un composé au moins bifonctionnel (C) dont les fonctions sont susceptibles de réagir avec les secondes fonctions du composé (A) pour former des ponts ester, thioester, amide.

2. Composition selon la revendication 1, **caractérisée en ce que** l'élastomère est choisi parmi le polybutadiène, le poly isoprène de synthèse, le poly chloroprène, le polyisobutylène, les copolymères à blocs du polybutadiène et de l'isoprène avec le styrène, le poly styrène-b-butadiène (SB), le poly styrène-b-butadiène-b-styrène (SBS), le poly styrène-b-isoprène-b-styrène (SIS), les poly styrène-b-(isoprène-stat-butadiène)-b-styrène ou poly styrène-b-isoprène-b-butadiène-b-styrène (SIBS), le SBS hydrogéné (SEBS), le poly styrène-b-butadiène-b-méthyl méthacrylate (SBM), ainsi que sa version hydrogénée (SEBM), le poly méthylméthacrylate-b-acrylate de butyle-b-méthyl méthacrylate (MAM), le poly styrène-b-acrylate de butyle-b-styrène (SAS), les copolymères statistiques du butadiène avec le styrène (SBR) et l'acrylonitrile (NBR) et leurs versions hydrogénées, les caoutchoucs butyle ou halogénés, les polyéthylènes, les polypropylènes, les élastomères silicone de formule générale -(Si(R)(CH₃) - O)ₙ- avec CH₃ et R liés à l'atome de silicium et celui-ci lié à l'atome d'oxygène, et R pouvant être un radical méthyl, phényl, vinyl, trifluoropropyl ou 2 cyanoéthyl, les copolymères éthylène-alcool vinylique, les copolymères d'éthylène-propylène et d'éthylène-propylène-diène (EPDM), les copolymères de l'éthylène avec des monomères acryliques et vinyliques notamment acétate de vinyle, les copolymères d'éthylène, acétate de vinyle, et anhydride maléique, les copolymères d'éthylène, ester acrylique, les copolymères d'éthylène, ester acrylique, anhydride maléique, les copolymères d'éthylène, ester acrylique, ester acrylique fonctionnel, des polymères ou copolymères acryliques souples, les élastomères diéniques, les copolymères multiblocs polyamide/polyéther, les élastomères à base de polyesters et de polyuréthane (PUR), les caoutchoucs recyclés à base d'élastomères thermoplastiques ou à base de caoutchouc réticulé recyclé ainsi que leurs mélanges.

3. Composition selon la revendication 1 ou 2, **caractérisée en ce qu'**elle comprend en outre au moins un agent réticulant ou un mélange d'agents réticulants.

4. Composition selon l'une quelconque des revendications 1 à 3, **caractérisé en ce que** le composé (A) est un trimère de l'un au moins des acides suivants : l'acide undécylénique, l'acide myristoléique, l'acide palmitoléique, l'acide oléique, l'acide linoléique, l'acide linolénique, l'acide ricinoléique, l'acide eicosénoïque, l'acide docosénoïque, l'acide eicosapentaénoïque et l'acide docosahexaénoïque.

5. Composition selon l'une quelconque des revendications 1 à 4, **caractérisé en ce que** le composé (A) est un mélange de trimère d'acide gras et de diacide carboxylique choisi parmi : un acide alkyldicarboxylique linéaire notamment l'acide glutarique, l'acide adipique, l'acide pimélique, l'acide subérique, l'acide azélaïque, l'acide sébacique, l'acide undécanedioïque, l'acide dodécanedioïque, l'acide brassylique, l'acide tétradécanedioïque, l'acide pentadecanedioïque, l'acide thapsique, l'acide octadécanedioïque ou ramifié notamment l'acide 3,3-diméthyl glutarique.

6. Composition selon l'une quelconque des revendications 1 à 5, **caractérisé en ce que** le composé (B) répond à l'une des formules (B1) à (B5) : 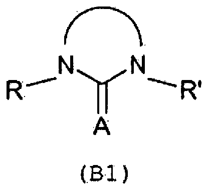 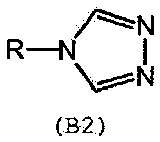 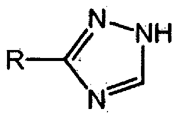 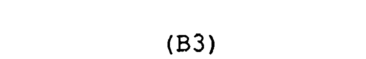 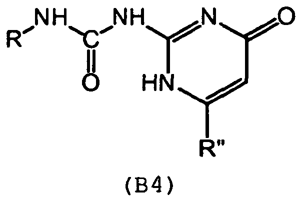 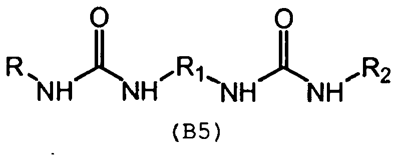 où :
R désigne un motif contenant au moins une fonction réactive,
R' désigne un atome d'hydrogène,
R", R₁ et R₂ désignent un groupe quelconque,
A désigne un atome d'oxygène ou de soufre ou un groupement -NH, de préférence un atome d'oxygène.

7. Composition selon la revendication 6, **caractérisé en ce que** le composé (B) est choisi parmi : la 2-aminoéthylimidazolidone (UDETA), 1-(2-[(2-aminoéthyl)amino]éthyl)imidazolidone (UTETA), la 1-(2-{2-[(2-aminoéthylamino]éthyl}amino) éthyl]imidazolidone (UTEPA), la N-(6-aminohexyl)-N'-(6-méthyl-4-oxo-1,4-dihydropyrimidin-2-yl)urée (UPy), le 3-amino-1,2,4-triazole et le 4-amino-1,2,4-triazole.

8. Composition selon l'une quelconque des revendications 1 à 7, caractérisé en ce le composé (C) porte au moins deux fonctions, identiques ou différentes, choisies parmi les fonctions époxy, alcool et amine.

9. Composition selon la revendication 8, **caractérisé en ce que** le composé (C) répond à la formule (I) :
H₂N-(CHR₁)ₘ-(CHR₂)ₙ-[NH-(CH₂)ₓ]_{y}-NH-(CHR₃)ₚ-(CHR₄)_{q}-NH₂ (I)
dans laquelle :
R₁, R₂, R₃ et R₄ désignent indépendamment un atome d'hydrogène ou un groupe alkyle en C₁-C₆ tel qu'un groupe méthyle,
m, n, p et q désignent indépendamment un nombre entier allant de 1 à 3,
x désigne un nombre entier allant de 1 à 6,
y désigne un nombre entier allant de 0 à 2.

10. Composition selon la revendication 9, **caractérisé en ce que**, dans la formule (I), au moins l'une, et de préférence toutes, les conditions ci-dessous sont satisfaites :
• R₁, R₂, R₃ et R₄ désignent un atome d'hydrogène,
• m + n est égal à 2, 3, ou 6 de préférence à 2,
• p + q est égal à 2, 3, ou 6 de préférence à 2,
• x désigne un nombre entier allant de 2 à 4,
• y est égal à 0 ou 1, de préférence à 0.

11. Composition selon la revendication 10, **caractérisé en ce que** le composé (C) est choisi parmi : la DETA (diéthylène triamine), la TETA (triéthylène tétramine), la TEPA (tétraéthylène pentamine), la dihexylène triamine, la cadavérine, la putrescine, l'hexaméthylène diamine ou le 1,12-diaminododécane ou une alkylène diamine cyclique telle que l'isophorone diamine.

12. Composition selon l'une quelconque des revendications 1 à 11, **caractérisé en ce que** le polymère supramoléculaire tel que défini ci-dessus dans les revendications 1 à 11 est amené à réagir avec de l'urée.

13. Procédé de fabrication d'une composition, ledit procédé comprenant :
- au moins une étape (a) de mélange d'un élastomère et d'un polymère supramoléculaire tels que définis dans les revendications 1 à 13 ; et
- au moins une étape (b) d'ajout d'un agent réticulant ou d'un mélange d'agents réticulants, ladite étape étant réalisée pendant ou après l'étape (a) ; puis
- une étape (c) de réticulation à chaud.

## Patentansprüche

1. Zusammensetzung, umfassend:
(i) mindestens ein Elastomer, das ausgewählt ist aus Naturkautschuk und einem synthetischen Polymer oder Copolymer, das aus der Polymerisation einer Mehrzahl von Monomeren mit einer Molekülmasse kleiner als 400 g/mol stammt; und
(ii) mindestens ein supramolekulares Polymer, das geeignet ist, durch die Umsetzung mindestens einer mindestens trifunktionellen Verbindung (A), die erste und zweite Funktionen trägt, mit:
- mindestens einer Verbindung (B), die einerseits mindestens eine reaktive Gruppe, die geeignet ist, mit den ersten Funktionen von (A) zu reagieren, und andererseits mindestens eine assoziative Gruppe trägt; und
- mindestens einer mindestens bifunktionellen Verbindung (C), deren Funktionen geeignet sind, mit den zweiten Funktionen der Verbindung (A) zu reagieren, um Ester-, Thioester-, Amidbrücken zu bilden,
erhalten zu werden.

2. Zusammensetzung nach Anspruch 1, **dadurch gekennzeichnet, dass** das Elastomer ausgewählt ist aus Polybutadien, synthetischem Polyisopren, Polychloropren, Polyisobutylen, Blockcopolymeren von Polybutadien und Isopren mit Styrol, Polystyrol-b-butadien (SB), Polystyrol-b-butadien-b-styrol (SBS), Polystyrol-b-isopren-b-styrol (SIS), Polystyrol-b-(isopren-stat-butadien)-b-styrol oder Polystyrol-b-isopren-b-butadien-b-styrol (SIBS), hydriertem SBS (SEBS), Polystyrol-b-butadien-b-methylmethacrylat (SBM) sowie dessen hydrierter Version (SEBM), Polymethylmethacrylat-b-acrylat von Butyl-b-methylmethacrylat (MAM), Polystyrol-b-acrylat von Butyl-b-styrol (SAS), statistischen Copolymeren von Butadien mit Styrol (SBR) und Acrylonitril (NBR) und deren hydrierten Versionen, Butylkautschuken oder halogenierten Kautschuken, Polyethylenen, Polypropylenen, Silikonelastomeren mit der allgemeinen Formel -(Si(R)(CH₃)O)ₙ-, wobei CH₃ und R an das Siliciumatom gebunden sind und dieses an das Sauerstoffatom gebunden ist, und R ein Methyl-, Phenyl-, Vinyl-, Trifluorpropyl- oder 2-Cyanoethylradikal sein kann, Ethylen-Vinylalkohol-Copolymeren, Ethylen-Propylen-Copolymeren und Ethylen-Propylen-Dien-Copolymeren (EPDM), EthylenCopolymeren mit Acryl- und Vinylmonomeren, insbesondere Vinylacetat, Ethylen-, Vinylacetat-und Maleinsäureanhydrid-Copolymeren, Ethylen-, Acrylsäureester-Copolymeren, Ethylen-, Acrylsäureester-, Maleinsäureanhydrid-Copolymeren, Ethylen-, Acrylsäureester-Copolymeren, funktionellem Acrylsäureester, flexiblen Acrylsäurepolymeren oder -Copolymeren, Dien-Elastomeren, Polyamid/Polyether-Multiblock-Copolymeren, Elastomeren auf der Basis von Polyestern und Polyurethan (PUR), Recycling-Kautschuken auf der Basis von thermoplastischen Elastomeren oder auf der Basis von vernetztem Recycling-Kautschuk sowie deren Mischungen.

3. Zusammensetzung nach Anspruch 1 oder 2, **dadurch gekennzeichnet, dass** sie ferner mindestens ein Vernetzungsmittel oder eine Mischung aus Vernetzungsmitteln umfasst.

4. Zusammensetzung nach einem der Ansprüche 1 bis 3, **dadurch gekennzeichnet, dass** die Verbindung (A) ein Trimer aus mindestens einer der folgenden Säuren ist: Undecylsäure, Myristoleinsäure, Palmitoleinsäure, Oleinsäure, Linoleinsäure, Linolensäure, Ricinoleinsäure, Eicosensäure, Docosensäure, Eicosapentaensäure und Docosahexaensäure.

5. Zusammensetzung nach einem der Ansprüche 1 bis 4, **dadurch gekennzeichnet, dass** die Verbindung (A) eine Mischung aus Trimerfettsäure und Dicarbonsäure ist, ausgewählt aus: einer linearen Alkyldicarbonsäure, insbesondere Glutarsäure, Adipinsäure, Pimelinsäure, Suberinsäure, Azelainsäure, Sebacinsäure, Undecandicarbonsäure, Dodecandicarbonsäure Brassylsäure, Tetradecandicarbonsäure, Pentadecandicarbonsäure, Thapsinsäure, Octadecandicarbonsäure, oder einer verzweigten Alkyldicarbonsäure, insbesondere 3,3-Dimethylglutarsäure.

6. Zusammensetzung nach einem der Ansprüche 1 bis 5, **dadurch gekennzeichnet, dass** die Verbindung (B) einer der folgenden Formeln (B1) bis (B5) entspricht: 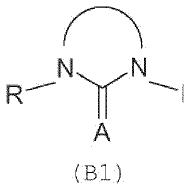 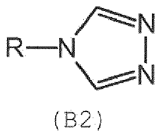 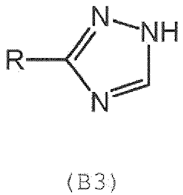 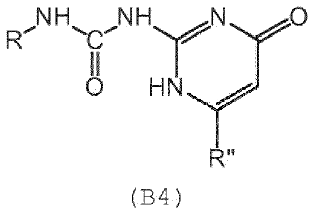 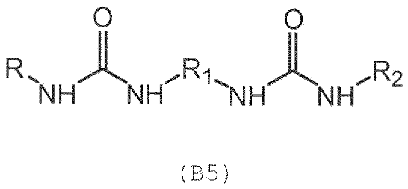 worin:
R für eine Einheit steht, die mindestens eine reaktive Funktion enthält,
R' für ein Wasserstoffatom steht,
R", R₁ und R₂ für eine beliebige Gruppe stehen,
A für ein Sauerstoffatom oder ein Schwefelatom oder eine [-NH]-Gruppe, bevorzugt ein Sauerstoffatom, steht.

7. Zusammensetzung nach Anspruch 6, **dadurch gekennzeichnet, dass** die Verbindung (B) ausgewählt ist aus: 2-Aminoethylimidazolidon (UDETA), 1-(2-[(2-Aminoethyl)amino]ethyl)imidazolidon (UTETA), 1-(2-{2-[(2-Aminoethylamino]ethyl}-amino)ethyl]imidazolidon (UTEPA), N-(6-Aminohexyl)-N'-(6-methyl-4-oxo-1,4-dihydropyrimidin-2-yl)-harnstoff (UPy), 3-A-mino-1,2,4-triazol und 4-Amino-1,2,4-triazol.

8. Zusammensetzung nach einem der Ansprüche 1 bis 7, **dadurch gekennzeichnet, dass** die Verbindung (C) mindestens zwei Funktionen, gleich oder verschieden, ausgewählt aus den Epoxy-, Alkohol-und Aminfunktionen, trägt.

9. Zusammensetzung nach Anspruch 8, **dadurch gekennzeichnet, dass** die Verbindung (C) der folgenden Formel (I) entspricht:
H₂N-(CHR₁)ₘ-(CHR₂)ₙ-[NH-(CH₂)ₓ]_{y}-NH-(CHR₃)ₚ-(CHR₄)_{q}-NH₂ (I)
wobei:
R₁, R₂, R₃ und R₄ unabhängig für ein Wasserstoffatom oder eine C₁-C₆-Alkylgruppe, wie etwa eine Methylgruppe, stehen,
m, n, p und q unabhängig für eine ganze Zahl zwischen 1 und 3 stehen,
x für eine ganze Zahl zwischen 1 und 6 steht,
y für eine ganze Zahl zwischen 0 und 2 steht.

10. Zusammensetzung nach Anspruch 9, **dadurch gekennzeichnet, dass** in der Formel (I) mindestens eine und bevorzugt alle nachfolgenden Bedingungen erfüllt sind:
• R₁, R₂, R₃ und R₄ stehen für ein Wasserstoffatom,
• m + n sind gleich 2, 3 oder 6, bevorzugt 2,
• p + q sind gleich 2, 3 oder 6, bevorzugt 2,
• x steht für eine ganze Zahl zwischen 2 und 4,
• y ist gleich 0 oder 1, bevorzugt 0.

11. Zusammensetzung nach Anspruch 10, **dadurch gekennzeichnet, dass** die Verbindung (C) ausgewählt ist aus: DETA (Diethylentriamin), TETA (Triethylentetramin), TEPA (Tetraethylenpentamin), Dihexylentriamin, Cadaverin, Putrescin, Hexamethylendiamin oder 1,12-Diaminododecan oder einem cyclischen Alkylendiamin, wie etwa Isophorondiamin.

12. Zusammensetzung nach einem der Ansprüche 1 bis 11, **dadurch gekennzeichnet, dass** das supramolekulare Polymer, wie in den Ansprüchen 1 bis 11 definiert, zur Umsetzung mit dem Harnstoff gebracht wird.

13. Verfahren zur Herstellung einer Zusammensetzung, wobei das Verfahren Folgendes umfasst:
mindestens einen Schritt (a) zum Mischen eines Elastomers und eines supramolekularen Polymers, wie in den Ansprüchen 1 bis 13 definiert; und
mindestens einen Schritt (b) zum Zugeben eines Vernetzungsmittels oder einer Mischung aus Vernetzungsmitteln, wobei der Schritt während oder nach Schritt (a) durchgeführt wird; dann
- einen Schritt (c) zur Heißvernetzung.

## Claims

1. A composition comprising:
(i) at least one elastomer which is chosen from natural rubber and a synthetic polymer or copolymer resulting from the polymerization of a majority of monomers with a molecular weight of less than 400 g/mol;
and
(ii) at least one supramolecular polymer obtainable by reacting at least one at least trifunctional compound (A) bearing first and second functions, with:
- at least one compound (B) bearing, firstly, at least one reactive group capable of reacting with the first functions of (A) and, secondly, at least one associative group; and
- at least one at least bifunctional compound (C) of which the functions are capable of reacting with the second functions of compound (A) in order to form ester, thioester and amide bridges.

2. The composition as claimed in claim 1, wherein the elastomer is chosen from polybutadiene, synthetic polyisoprene, polychloroprene, polyisobutylene, block copolymers of polybutadiene and of isoprene with styrene, poly(styrene-b-butadiene) (SB), poly(styrene-b-butadiene-b-styrene) (SBS), poly(styrene-b-isoprene-b-styrene) (SIS), poly(styrene-b-(isoprene-stat-butadiene)-b-styrene) or poly(styrene-b-isoprene-b-butadiene-b-styrene) (SIBS), hydrogenated SBS (SEBS), poly(styrene-b-butadiene-b-methyl methacrylate) (SBM), and also its hydrogenated version (SEBM), poly(methyl methacrylate-b-butyl acrylate-b-methyl methacrylate) (MAM), poly(styrene-b-butyl acrylate-b-styrene) (SAS), random copolymers of butadiene with styrene (SBR) and acrylonitrile (NBR) and their hydrogenated versions, butyl or halogenated rubbers, polyethylenes, polypropylenes, silicone elastomers of general formula -(Si(R)(CH₃)-O)ₙ- with CH₃ and R bonded to the silicon atom and the latter bonded to the oxygen atom, and it being possible for R to be a methyl, phenyl, vinyl, trifluoropropyl or 2-cyanoethyl radical, ethylene-vinyl alcohol copolymers, ethylene-propylene and ethylene-propylene-diene (EPDM) copolymers, copolymers of ethylene with acrylic and vinyl monomers, in particular vinyl acetate, copolymers of ethylene, vinyl acetate and maleic anhydride, copolymers of ethylene and acrylic ester, copolymers of ethylene, acrylic ester and maleic anhydride, copolymers of ethylene, acrylic ester and functional acrylic ester, flexible acrylic polymers or copolymers, diene elastomers, polyamide/polyether multiblock copolymers, elastomers based on polyesters and on polyurethane (PUR), recycled rubbers based on thermoplastic elastomers or based on recycled crosslinked rubber, and also blends thereof.

3. The composition as claimed in claim 1 or 2, also comprising at least one crosslinking agent or a mixture of crosslinking agents.

4. The composition as claimed in any one of claims 1 to 3, wherein compound (A) is a trimer of at least one of the following acids: undecylenic acid, myristoleic acid, palmitoleic acid, oleic acid, linoleic acid, linolenic acid, ricinoleic acid, eicosenoic acid, docosenoic acid, eicosapentaenoic acid and docosahexaenoic acid.

5. The composition as claimed in any one of claims 1 to 4, wherein compound (A) is a mixture of a trimer of a fatty acid and of dicarboxylic acid chosen from: a linear alkyldicarboxylic acid, in particular glutaric acid, adipic acid, pimelic acid, suberic acid, azelaic acid, sebacic acid, undecanedioic acid, dodecanedioic acid, brassylic acid, tetradecanedioic acid, pentadecanedioic acid, thapsic acid or octadecanedioic acid, or a branched alkyl dicarboxylic acid, in particular 3,3-dimethylglutaric acid.

6. The composition as claimed in any one of claims 1 to 5, wherein compound (B) corresponds to one of formulae (B1) to (B5) : 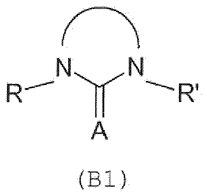 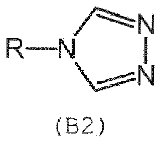 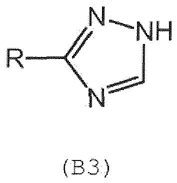 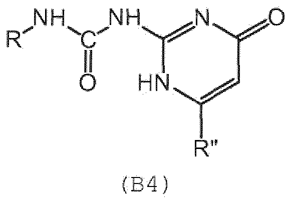 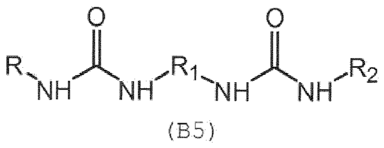 where:
R denotes a unit containing at least one reactive function,
R' denotes a hydrogen atom,
R", R₁ and R₂ denote any group,
A denotes an oxygen or sulfur atom or an -NH group, preferably an oxygen atom.

7. The composition as claimed in claim 6, wherein compound (B) is chosen from: (2-aminoethyl)imidazolidone (UDETA), 1-(2-[(2-aminoethyl)amino]ethyl)imidazolidone (UTETA), 1-[2-({2-[(2-aminoethyl)amino]ethyl}amino)ethyl]imidazolidone (UTEPA), N-(6-aminohexyl)-N'-(6-methyl-4-oxo-1,4-dihydropyrimidin-2-yl)urea (UPy), 3-amino-1,2,4-triazole and 4-amino-1,2,4-triazole.

8. The composition as claimed in any one of claims 1 to 7, wherein compound (C) bears at least two identical or different functions chosen from epoxy, alcohol and amine functions.

9. The composition as claimed in claim 8, wherein compound (C) corresponds to formula (I) :
H₂N-(CHR₁)ₘ-(CHR₂)ₙ-[NH-(CH₂)ₓ]_{y}-NH-(CHR₃)ₚ-(CHR₄)_{q}-NH₂ (I)
in which:
R₁, R₂, R₃ and R₄ independently denote a hydrogen atom or a C₁-C₆ alkyl group, such as a methyl group,
m, n, p and q independently denote an integer ranging from 1 to 3,
x denotes an integer ranging from 1 to 6,
y denotes an integer ranging from 0 to 2.

10. The composition as claimed in claim 9, wherein, in formula (I), at least one, and preferably all, of the conditions below are met:
• R₁, R₂, R₃ and R₄ denote a hydrogen atom,
• m + n is equal to 2, 3 or 6, preferably to 2,
• p + q is equal to 2, 3 or 6, preferably to 2,
• x denotes an integer ranging from 2 to 4,
• y is equal to 0 or 1, preferably to 0.

11. The composition as claimed in claim 10, wherein compound (C) is chosen from: DETA (diethylenetriamine), TETA (triethylenetetramine), TEPA (tetraethylenepentamine), dihexylenetriamine, cadaverine, putrescine, hexamethylenediamine or 1,12-diaminododecane, or a cyclic alkylene diamine such as isophorone diamine.

12. The composition as claimed in any one of claims 1 to 11, wherein the supramolecular polymer as defined above in claims 1 to 11 is reacted with urea.

13. A process for producing a composition, said process comprising:
- at least one step (a) of mixing an elastomer and a supramolecular polymer as defined in claims 1 to 13; and
- at least one step (b) of adding a crosslinking agent or a mixture of crosslinking agents, said step being carried out during or after step (a) : then
- a hot-crosslinking step (c).
